# EUROPEAN PATENT APPLICATION

(11) **EP 3 603 996 A1**
(43) Date of publication of application: **05.02.2020**
(21) Application number: 18770200.6
(22) Date of filing: 26.02.2018
(51) Int. Cl.: B60C 19/00, B60C 23/04

(54) **FUNCTIONAL COMPONENT ATTACHMENT BASE**

(30) Priority: 21.03.2017 JP 2017054916
(71) Applicant: Bridgestone Corporation, Tokyo 104-8340 (JP)
(72) Inventor: NISHII Masayuki, Tokyo 104-8340 (JP)
(74) Representative: Oxley, Robin John George
(86) International application number: PCT/JP2018/006988
(87) International publication number: WO 2018/173640

(57) **Abstract**

A functional component attachment base (20) which is formed of rubber and which is attached to an inner surface of a tire (40), including: an opening part (21) that serves as an outlet and inlet port for inserting and removing an attachment part (31) of a functional component (30); an accommodation concave part (22) that accommodates the attachment part (31) of the functional component (30); a bottom part (23) to be fixed to the inner surface of the tire (40); and a side wall part (24) connecting the bottom part (23) and the opening part (21), in which a shape of the bottom part (23) on a tire inner surface side is a convex shape.

## Description

### TECHNICAL FIELD

The present invention relates to a functional component attachment base for attaching a functional component having a sensor that detects a status of a tire, and more particularly, relates to a functional component attachment base suitably used for a narrow-width tire and a tire having a small rim diameter.

### BACKGROUND ART

Conventionally, there has been known a technology in which a functional component such as a sensor module having integrated therein a sensor such as a pressure sensor, a temperature sensor, an acceleration sensor and the like, a battery or a power generation element and a wireless device, is mounted via a rubber base on an inner surface of a tire to detect a status of the running tire such as an inner pressure of the tire, and transmit detected sensor information to a vehicle side (for example, Patent Document 1).

Patent Document 1: Japanese Unexamined Patent Application Publication No. 2015-160512.

### SUMMARY OF THE INVENTION

### Technical Problem

However, since a shape of a bottom surface, which serves as a surface to be attached to an inner surface of a tire, of a base described in Patent Document 1 is a planar shape, when the base is attached to a thick and hard tire such as an auxiliary tire of an aircraft or a small tire having a tread width of about 2.25 to 8 inches and a rim diameter of not more than 24 inches, stress acting on the functional component becomes large at the time of stepping-in and kicking-out, due to bad bondability to a curved inner surface of the tire. As a result, there has been a problem that the durability of the base is deteriorated.

The present invention is made in view of the conventional problem and aims at providing a functional component attachment base which, even for a tire of which inner circumferential surface has a large curvature such as a tire having a narrow width and a tire having s small rim diameter, reduces stress acting on the functional component at the time of stepping-in and kicking-out, whereby the durability of the base is improved.

### Solution to Problem

According to an aspect of the present invention, there is provide a functional component attachment base which is formed of rubber and which is attached to an inner surface of a tire, including an opening part that serves as an outlet and inlet port for inserting and removing an attachment part of a functional component, and an accommodation concave part that accommodates the attachment part of the functional component. The functional component attachment base further includes a bottom part to be fixed to the inner surface of the tire and a side wall part that connects the bottom part and the opening part, in which the bottom part on a tire inner surface side (hereinafter referred to as a base bottom surface) has a convex shape.

### BRIEF DESCRIPTION OF THE DRAWINGS

FIG. 1 is a view illustrating a functional component with a base according to an exemplary embodiment of the present invention;
FIG. 2 is a view illustrating another example of the functional component with the base according to the present invention; and
FIG. 3 is a view illustrating another example of the functional component with the base according to the present invention.

### DESCRIPTION OF EMBODIMENT

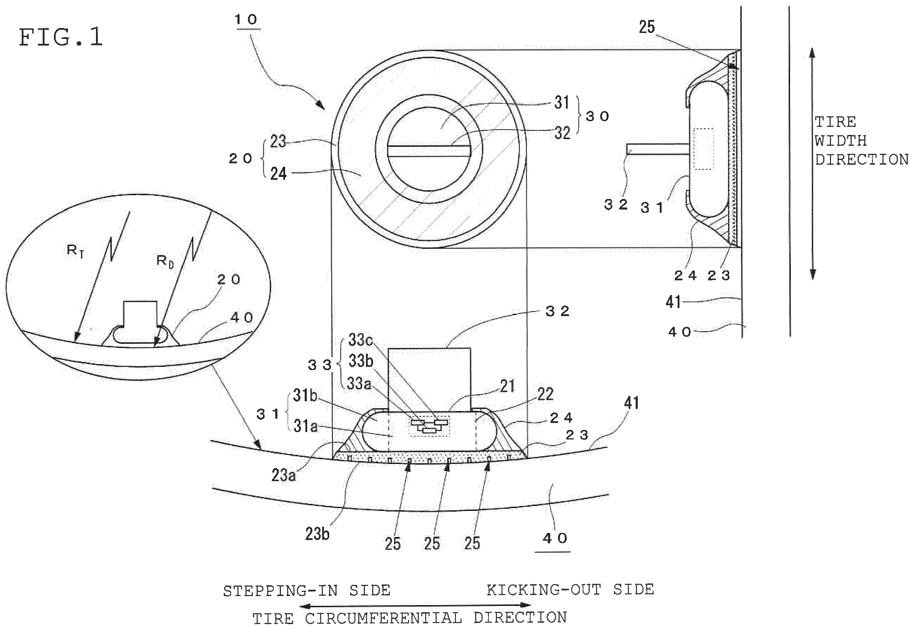

Fig. 1 illustrates a functional component 10 with a base according to an exemplary embodiment of the present invention. In Fig. 1, the middle part is a plane view, the lower part is a cross sectional view cut by a plane perpendicular to a tire width direction, and the right part is a cross sectional view cut by a plane perpendicular to a tire circumferential direction. In each part of the figure, the numeral 20 denotes a functional component attachment base (hereinafter referred to as a base) to be attached to a tire inner surface side, and 30 denotes a functional component to be mounted in the base 20.

In Fig.1, the left-right direction of the middle and lower parts is the tire circumferential direction, the left side is a stepping-in side and the right side is the kicking-out side. The up-down direction of the middle and lower parts is the tire width direction.

In this example, a tire 40 is a wide-width and small tire of which tread width is sufficiently larger than a length in the tire width direction of the functional component to be attached, but a curvature in the tire circumferential direction is large.

The functional component 30 includes an attachment part 31, a holding part 32 formed so as to protrude from the attachment part 31 and a sensor module 33 to be built in the attachment part 31.

The attachment part 31 is a rotating body of which cross section is a track shape (also called a rounded rectangle) and having a columnar part 31a and an annular part 31b located in a periphery of the columnar part 31a. As described later, an outer circumferential part of the columnar part 31a and the annular part 31b are accommodated in the base 20.

The holding part 32 is a small plate-shape member that protrudes from the upper surface of the columnar part 31a toward an opposite side of the tire inner surface side, and its width, which is a length in the tire circumferential direction, is smaller than the diameter of the columnar part 31a.

The sensor module 33 is an integrated unit of a sensor 33a for measuring temperature, pressure, vibration and so on of the inside tire, a power generation element 33b as a power source and a wireless device 33c for transmitting data detected by the sensor 33a. The sensor module 33 is built in the attachment part 31. A battery may be used instead of the power generation element 33b.

The base 20 is formed of rubber and includes an opening 21 that serves as an outlet and inlet port for inserting and removing the attachment part 31 of the functional component 30, and an accommodation concave part 22 for accommodating the attachment part 31 of the functional component 30. The base 20 further includes a bottom part 23 to be fixed to an inner liner part 41 which is an inner surface of the tire 40, and a side wall part 24 that rises up from the peripheral part of the bottom part 23 and connects the bottom part 23 and the opening 21.

The bottom part 23 is a disc-shaped member in a planar view, in which an upper surface 23a side, which is the functional component 30 side, is a planar shape, and a bottom surface 23b side, which is the tire inner surface side, is a convex shape conforming to the shape of the tire inner surface in the tire circumferential direction. The bottom surface 23b is provided with plural slits 25 extending in the tire width direction.

The side wall part 24 is a cylindrical member having a concave part of a rotating body shape of which cross section is rounded rectangle and which accommodates the annular part 31b of the attachment part 31 of the functional component 30. The accommodating concave part 22 is formed by the inner wall of the side wall part 24 and the inner wall of the bottom part 23.

In this example, since the shape of the convex part of the bottom part 23 of the base 20 substantially overlaps the concave surface shape of the inner surface of the tire, even though the curvature in the tire circumferential direction is large, the bondability to the tire 40 is improved. Accordingly, not only the base 20 with the functional component attached can be firmly bonded to the inner surface of the tire 40, but also it is easy for the base 20 to follow the curved shape of the inner surface of the tire, thus the stress acting on the functional component 30 may be reduced at the time of stepping-in and kicking-out.

At this time, it is preferable to form the convex part of the bottom part 23 so that R_{D} ≧ R_{T} and ΔR < 0.2[m] are satisfied, when a radius of curvature of the inner surface of the tire in the circumferential direction is R_{T}, a radius of curvature of the convex part of the bottom part 23 is R_{D}, and a difference ΔR = R_{D} - R_{T}. With this, the bondability of the base 20 to the tire 40 and the followability of the base 20 at the time of deformation of the tire are firmly improved.

In this example, the side wall part 24 is formed of a relatively hard rubber having an elastic modulus of not less that 1 x 10⁹ Pa and not more than 1 x 10¹¹ Pa, and the convex part is formed of a soft rubber having an elastic modulus of not less that 1 x 10⁵ Pa and not more than 1 x 10⁹ Pa. With this, the functional component 30 can be adequately held and the bondability of the base 20 to the tire 40 and the followability of the base 20 at the time of deformation of the tire are further improved.

In addition, since the bottom surface 23b of the base 20 is provided with plural slits 25 extending in the tire width direction, not only the shear stress between the base 20 and the tire 40 is reduced, but also the bottom surface 23b is easily deformed, the bondability of the base 20 to the tire 40 can be duly assured even for a tire having a different curvature.

As described above, the functional component attachment base according to the exemplary embodiment of the present invention is a functional component attachment base which is formed of rubber and which is attached to an inner surface of a tire. The functional component attachment base includes an opening part that serves as an outlet and inlet port for inserting and removing an attachment part of a functional component, an accommodation concave part that accommodates the attachment part of the functional component, a bottom part to be fixed to the inner surface of the tire, and a side wall part that connects the bottom part and the opening part, in which the bottom part on a tire inner surface side (hereinafter referred to a base bottom surface) has a convex shape.

With this, the bondability to a small tire with a large curvature of the inner peripheral surface is improved. Accordingly, not only the base with the functional component attached is firmly bonded to the inner surface of the tire, but also it is easy for the base to follow the curved shape of the inner surface of the tire, thus the stress acting on the functional component can be reduced at the time of stepping-in and kicking-out. Therefore, the durability of the base and the functional component can be improved.

Further, because the convex part is formed so that R_{D} ≧ R_{T} and ΔR < 0.2[m] are satisfied, when a radius of curvature of the inner surface of the tire in the circumferential direction is R_{T}, a radius of curvature of the bottom part on the tire inner surface side is R_{D}, and a difference between two of the radius of curvatures is ΔR, the bondability to a specific tire can be further improved. When the curvature is *K*, the radius of curvature R is defined as R=1/*K*.

Furthermore, since the convex part is formed of a soft rubber having an elastic modulus of not less that 1 x 10⁵ Pa and not more than 1 x 10⁹ Pa, the followability to the curved shape of the inner surface of the tire can be further improved.

Furthermore, since the convex part is provided with plural slits opening to the inner surface of the tire to thereby reduce the shear stress acting on the convex part at the time of stepping-in and kicking-out, the durability of the base and the functional component can be further improved.

Furthermore, since the slits can absorb the difference between the shape of the base bottom surface and the concave shape of the tire inner surface, even for a tire of which inner surface has a different concave shape, the base and the inner surface of the tire can be firmly bonded together.

The exemplary embodiment of the present invention has been described, however, it should be noted that the technical scope of the present invention is not limited to the scope of the exemplary embodiment described above. It is apparent for a person with ordinary skill in the art that various changes or modifications may be added to the above-described exemplary embodiment. It is also apparent from the scope of the claims that such changes or modifications may be included in the technical scope of the present invention.

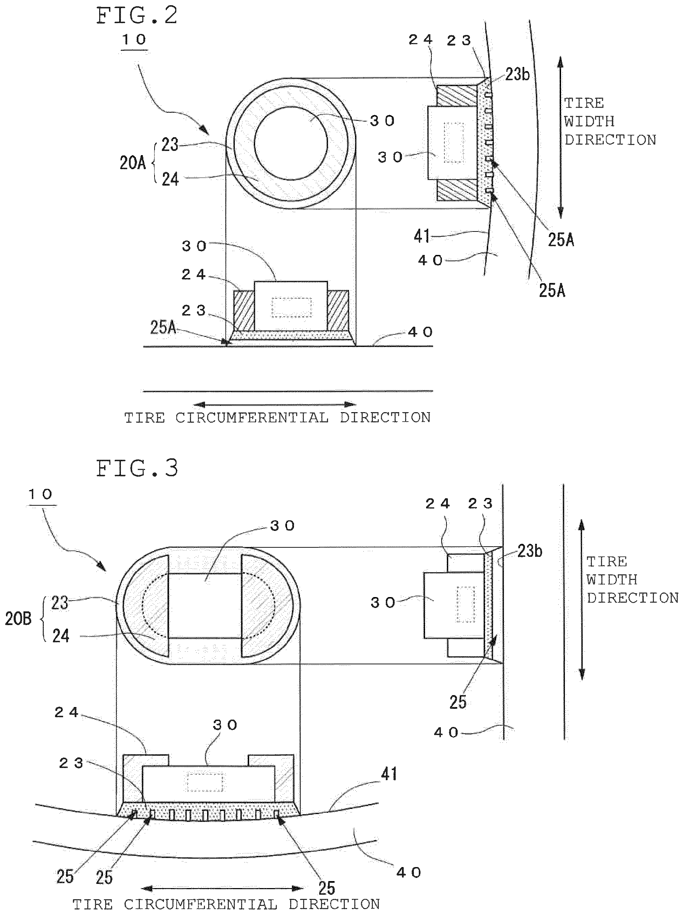

For example, in the above-described exemplary embodiment, as the tire 40, a large-width and small tire having a wide tread width but a large curvature in the tire circumferential direction, is used. However, as illustrated in Fig. 2, in a case of the tire 40A having a small curvature in the tire circumferential direction but a large curvature in the tire width direction, as illustrated in the right part of Fig. 2, the shape of the bottom surface 23b of the base 20A when viewed from the cross section perpendicular to the tire circumferential direction may be made convex following the tire inner surface shape in the tire width direction, and as illustrated in the lower part of Fig. 2, the shape of the bottom surface 23b of the base 20A may be made planar when viewed from the cross section perpendicular to the tire width direction. In addition, as the slits provided in the base surface 23b, slits 25A extending in the tire circumferential direction may be employed.

Furthermore, although a figure is omitted, in a case of a small tire having a large curvature in the tire circumference direction and a large curvature in the tire width direction, the shape of the bottom surface 23b may be made convex following both of the shape of the tire inner surface in the tire circumferential direction and the shape of the tire inner surface in the tire width direction. In other words, the shape of the bottom surface when viewed from the cross section perpendicular to the tire circumferential direction may be made convex following the shape of the tire inner surface in the tire width direction, and the shape of the bottom surface when viewed from the cross section perpendicular to the tire width direction may be made convex following the shape of the tire inner surface in the tire circumferential direction.

Furthermore, the present invention may be applicable to a thick and hard tire such as an auxiliary tire of an aircraft. In this case, it is preferable that both of the shape of the bottom surface when viewed from the cross section perpendicular to the tire circumferential direction and the shape of the bottom surface when viewed from the cross section perpendicular to the tire width direction are made convex.

In the above-described exemplary embodiment, the base 20 is circular shape in plan view, however, as illustrated in Fig. 3, the base may be a base 20B of which length in the tire circumferential direction is longer than the length in the tire width direction. Namely, the base in the present invention may have a shape different from the base 20 in Fig. 1 and the base 20A in Fig. 2.

In the above-described exemplary embodiment, the entire base part 23 is formed of a soft rubber having an elastic modulus of not less that 1 x 10⁵ Pa and not more than 1 x 10⁹ Pa, however, only the base surface 23b side, which is the convex part on the tire inner surface side, may be formed of a soft rubber and the functional component 30 side of the base part 23, which is the opposite side to the tire inner surface side, may be formed of a relatively hard rubber having an elastic modulus of not less that 1 x 10⁹ Pa and not more than 1 x 10¹¹ Pa. With this, the bondability to the tire 40 and the followability at the time of deformation of the tire are further improved, while enhancing the holding power of the functional component.

### REFERENCE SIGN LIST

10: functional component with base, 20: functional component attachment base, 21: opening part, 22: accommodation concave part, 23: bottom part, 23a: upper surface, 23b: bottom surface, 24: side wall part, 30: functional component, 31: attachment part, 31a: columnar part, 31b: annular part, 32: holding part, 33: sensor module, 40: tire, 41: inner liner part.

## Claims

1. A functional component attachment base which is formed of rubber and which is attached to an inner surface of a tire, including an opening part that serves as an outlet and inlet port for inserting and removing an attachment part of a functional component, and an accommodation concave part that accommodates the attachment part of the functional component, the functional component attachment base comprising:
a bottom part to be fixed to the inner surface of the tire; and
a side wall part that connects the bottom part and the opening part,
wherein the bottom part on a tire inner surface side has a convex shape.

2. The functional component attachment base according to claim 1, wherein when a radius of curvature of the inner surface of the tire is R_{T}, a radius of curvature of the bottom part on the tire inner surface side is R_{D}, and a difference between the two of the radius of curvature is ΔR, R_{T} ≧ R_{D} and ΔR < 0.2[m] are satisfied.

3. The functional component attachment base according to claim 1 or 2, wherein an elastic modulus of the rubber of the convex part is not less than 1 x 10⁵ Pa and not more than 1 x 10⁹ Pa.

4. The functional component attachment base according to claim 1 or 2, wherein the convex part is provided with a plurality of slits that open to the inner surface of the tire.
